## Europäisches Patentamt
## European Patent Office
## Office européen des brevets

(11) Veröffentlichungsnummer: **0 167 950**
**B1**

(12) **EUROPÄISCHE PATENTSCHRIFT**

(45) Veröffentlichungstag der Patentschrift:
21.09.88

(21) Anmeldenummer: **85108112.5**

(22) Anmeldetag: **29.06.85**

(51) Int. Cl.⁴: **B 01 D 17/025** //
**C02F1/40, E03F5/16**

(54) Vorrichtung zum Separieren von Flüssigkeiten.

(30) Priorität: **07.07.84 DE 8420374 U**
**19.04.85 DE 3514157**

(43) Veröffentlichungstag der Anmeldung:
**15.01.86 Patentblatt 86/3**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**EP-A-0 037 855**
**EP-A-0 037 886**
**DE-A-2 536 644**
**DE-A-3 014 204**
**DE-A-3 114 861**
**DE-C-291 781**
**FR-A-732 153**
**FR-A-895 190**
**FR-A-2 464 335**
**US-A-2 744 630**

(73) Patentinhaber: **Hölscher, Richard, Dipl.- Ing.,
Matthias- Claudius- Strasse 14, D-2970 Emden 1
(DE)**

(72) Erfinder: **Hölscher, Richard, Dipl.- Ing., Matthias-
Claudius- Strasse 14, D-2970 Emden 1 (DE)**

(74) Vertreter: **Patentanwälte Wenzel & Kalkoff,
Flasskuhle 6 Postfach 2448, D-5810 Witten (DE)**

LIBER, STOCKHOLM 1988

**Beschreibung**

Die Erfindung betrifft eine Vorrichtung zum Separieren von Flüssigkeiten unterschiedlichen spezifischen Gewichtes, die aus einem Abscheidebehälter mit einem Zulauf für das Flüssigkeitsgemisch und aus einem an seiner höchsten Stelle angebrachten Separationsrohr besteht, bei der der Flüssigkeitsbestandteil mit dem geringeren spezifischen Gewicht aus dem Separationsrohr seitlich über ein Überlaufrohr und der Flüssigkeitsbestandteil mit dem nächst höheren spezifischen Gewicht über eine als Ablauf dienende Abzweigung abläuft, die von einem mit seinem unteren Ende in den Abscheidebehälter tief hineinragenden, oben offenen Steigrohr abgeht, und bei der bei gefüllter Vorrichtung im Ruhezustand die Grenzschicht zwischen diesen beiden Flüssigkeitsbestandteilen innerhalb des Separationsrohres liegt.

Eine derartig Vorrichtung ist z. B. in der US-A-2 744 630 beschrieben. Sie dient in diesem Fall zur Separierung von Minzölen von Wasser. Im wesentlichen sind zwei Separationsräume vorhanden, nämlich ein eigentliches Separationsrohr und eine zylindrische, ringsherum angeordnete Separationskammer, die mit dem Auslauf direkt über das Behälterinnere verbunden ist.

Wegen der in der Regel gleichmäßigen Produktion von Minzölen aus einem Flüssigkeitsgemisch aus Wasser und Minzölen muß keine Vorsorge getroffen werden für einen Zulauf an Flüssigkeitsgemisch, der ein Mehrfaches der Soll- bzw. Auslegungsmenge ist. Derartige Betriebsverhältnisse können jedoch bei einer Vorrichtung dieser Gattung (DE-A-2 536 644) vorkommen, da das Einsatzgebiet dieser Vorrichtung ebenfalls Tankstellen, Garagenhöfe, Industrieanlagen oder sonstige Bereiche umfaßt, die Regenfällen ausgesetzt sind. Bei eiem derartig starken Zustrom wird das Innere der Abscheidungskammer stark verwirbelt, so daß große Anteile des abzusondernden Flüssigkeitsbestandteils in den Ablauf und damit in der Regel in das übliche Abwassersystem gelangen. Bei Probeläufen wird daher dem Verhalten einer Vorrichtung bei Überlastung besonderes Augenmerk gewidmet.

Es ist deshalb Aufgabe der Erfindung, eine Vorrichtung der eingangs genannten Art so zu verbessern, daß bei zuverlässiger Separierung von Zulaufmengen im Nennbereich die Abgabe von abzusondernden Bestandteilen in den Auslauf. der Vorrichtung weitgehend verhindert wird.

Zur Lösung dieser Aufgabe schlägt die Erfindung vor, daß voneinander getrennt ein Vorabscheider und ein Nachabscheider vorhanden sind, daß zur Verbindung beider Abscheider eine Überstromleitung vorhanden ist, daß der Zulauf und die Separationsrohre ebenfalls als vertikale, oben offene Rohre ausgebildet sind, daß die Überströmleitung mit einem vorhandenen vertikalen Rohr verbunden oder mit einem eigenen Belüftungsrohr verbunden ist, und daß alle vertikalen Rohre, das Steigrohr und das Belüftungsrohr direkt oder über eine Sammelleitung mit der Umgebung im Austausch stehen.

In jedem Abscheidebehälter läuft in erster Linie die grobe Trennung zwischen Flüssigkeiten unterschiedlichen spezifischen Gewichtes ab, wobei auf Grund der baulichen Gegebenheiten der leichtere Flüssigkeitsbestandteil in das Separationsrohr gelangt. In diesem Separationsrohr bildet sich auch die Grenzschicht zwischen zwei Flüssigkeitsbestandteilen aus, also beispielsweise zwischen einem Öl und Wasser. Innerhalb des Separationsrohres setzt sich die Separation fort, wobei eine Störung der Separation durch das einlaufende Flüssigkeitsgemisch innerhalb des Separartionrohres so gut wie ausgeschlossen ist. Solange also keine Emulsionsbildung zwischen beiden Flüssigkeiten stattgefunden hat, findet eine äußerst sorgfältige und vollständige Trennung eines leichten Flüssigkeitsbestandteils von einem Hauptmedium statt.

Zu diesem Erfolg trägt in hohem Maße das dem Zulauf zugeordnete vertikale Rohr bei. Dabei ist besonders wichtig, daß das Rohr vertikal nach oben über den Zulauf hinaus fortgesetzt ist, wodurch eine Art Expansionsraum geschaffen wird. Wenn z. B. der Zulauf aus irgendwelchen Gründen für längere Zeit deutlich oberhalb der zulaufenden Nennmenge der erfindungsgemäßen Vorrichtung liegt, führt das nicht zu einem sofortigen Druckanstieg im Zulauf, sondern der Flussigkeitsspiegel in dem vertikalen Rohr des Zulaufes steigt allmählich bis zu einem neuen Gleichgewichtsdruck an, so daß ein entsprechend weicher Druckanstieg in der gesamten Vorrichtung zu beobachten ist. Die relativ sanften Druckänderungen führen zu einer insgesamt schonenden Einleitung, bei der Turbulenzen und damit Emulsionsbildungen und dergleichen vermieden werden.

Bei heftigerer Zuströmung beispielsweise nach einem Platzregen auf einen Tankstellenhof, an dessen Kanalisation die erfindungsgemäße Vorrichtung angechlossen ist, kommt es an dem vertikalen Rohr des Zulaufes oder sogar an dem Belüftungsrohr der Überströmleitung zu einem Überlaufen der Vorrichtung, so daß gegebenenfalls kontaminiertes Wasser in die darunter liegende Grube läuft. Bei entsprechender Vorsorge ist dieses Verhalten der Vorrichtung besser als eine Abgabe von kontaminiertem Wasser in die Kanalisation; die Grube bzw. eine entsprechende Auffangwanne kann zu einem späteren Zeitpunkt leergepumpt und der Vorrichtung gemäß der Erfindung zugeführt werden, wenn die Zulaufmenge unterhalb der zulaufenden Nennmenge liegt.

Da in der Regel eine fortlaufende Separierung beispielsweise von Leichtflüssigkeiten aus einem Hauptmedium zu erwarten ist, empfiehlt sich die Bereitstellung eines Sammeltanks für die Leichtflüssigkeit, der an den Oberlaufrohren angeschlossen ist. Die Oberlaufkante an den Oberlaufrohren ist so gelegt, daß unter normalen Betriebsverhältnissen die Grenzschicht zwischen dem Hauptmedium und dem spezifisch leichteren Flüssigkeitsbestandteil gerade unter der Oberlaufkante liegt, also kein Hauptmedium in den Sammelbehälter gelangt. Hingegen tritt die spezifisch leichtere Flüssigkeit bei entsprechendem Anfall fortwährend über die Kante in den Sammelbehälter ein. Mit Hilfe einer Flüssigkeitsstandsanzeige, die gegebenenfalls mit einer Alarmvorrichtung gekoppelt sein kann, kann die Notwendigkeit der Entleerung fortlaufend oder periodisch überwacht werden. Mit Hilfe einer gesonderten Entsorgungsletung, die annähernd bis zum Grund jedes Sammelbehälters reicht, kann dann die Entleerung erfolgen.

Es hat sich als vorteilhaft erwiesen, wenn die Überströmleitung relativ lang ist, weil dies wiederum zu einer Beruhigung des darin strömenden Mediums führt. Zur Gestaltung einer möglichst langen Oberströmleitung können in natürlicher Weise als Anschlußstellen an den Abscheidern möglichst weit voneinander liegende Punkte gewählt werden, darüber hinaus können jedoch Windungen oder andere künstliche Verlängerungen in die Überströmleitung integriert werden, falls sich das zur weiteren Herbeiführung einer Beruhigung der Strömung als erforderlich erweisen sollte. Bei einer erfindungsgemäßen Vorrichtung für 4 1/min als Nennleistung ist eine Länge der Oberströmleitung von 4 bis 5 m mit guten Ergebnissen verwendet worden. Das Belüftungsrohr kann bei einer Führung der Oberströmleitung, die nicht in ein und derselben Ebene liegt, auch zum automatischen Entlüften der Überstromleitung eingesetzt werden, wenn sie richtig positioniert sind; gegebenenfalls sind zwei derartige Belüftungsleitungen vorzusehen.

In jedem Abscheidebehälter gemäß der Erfindung können Schwallbleche oder sonstige Strömungshindernisse dazu verwendet werden, um eine direkte Strömung vom Zulauf zur Oberströmleitung bzw. von der Überströmleitung zum Auslauf zu unterbinden. Dadurch wird die Strömung an mindestens einer Stelle aufwärts gezwungen, so daß leichte Bestandteile über ihre eigene Tendenz zum Aufsteigen hinaus aufwärts transportiert werden. In jedem Fall findet jedoch die Feinseparierung innerhalb des zugeordneten Separationsrohres statt, in dem die Separierung den Einflüssen auf Grund der Strömung in dem darunterliegenden Abscheidebehälter entzogen ist.

Als besonders einfach in der Herstellung und wirkungsvoll in der Separierung haben sich Abscheidebehälter erwiesen, die als liegende Kegelstümpfe ausgebildet sind, wobei die oberste Mantellinie zur Horizontalen geneigt ist. Am höchsten Punkt dieser Mantellinie in unmittelbarer Nähe zu der einen Stirnwand befindet sich dann jeweils der Eingang in das Separationsrohr. Wenn zwei gleiche kegelstumpfartige Abscheidebehälter eingesetzt werden, werden sie vorzugsweise mit ihren größeren Stirnflächen gegeneinander gekehrt. Zwischen diesen Stirnflächen kann, beispielsweise als zylindrischer Verbindungsabschnitt, der gemeinsame Sammelbehälter für die Separation aus dem Vorabscheider und dem Nachabscheider angeordnet sein.

Neben einer Separierung von Flüssigkeitsbestandteilen ist in der Regel auch eine Sedimentierung von Feststoffen zu erwarten, die sich als Schlammablagerung am Boden des jeweiligen Separationsbehälters ansammeln. Derartige Schlammablagerungen können besonders leicht durch das vertikale Rohr des Zulaufs oder das Ablaufsteigrohr abgesaugt werden, was prophylaktisch in vorgegebenen Zeitperioden oder nach festgestelltem Anfall vorgenommen wird. Dabei kann es vorteilhaft sein, wenn der Behälterboden zur Absaugstelle leicht geneigt angeordnet ist, so daß die Absaugung im Zentrum der Ansammlung einsetzen kann. Bei Abscheidebehältern, die kegelstumpfartig ausgebildet sind, genügt eine Anordnung, bei der die jeweils unterste Mantellinie zu den vertikalen Rohren ein Gefälle aufweist.

Da bei der Vorrichtung gemäß der Erfindung die vertikalen Rohre, das Steigrohr sowie das Belüftungsrohr oben offen sind, empfiehlt sich eine Belüftungs-Sammelleitung für alle Rohre gemeinsam, die beispielsweise in die oben offene, weite Öffnung des vertikalen Rohres an dem Zulauf mündet. Dort kann dann z. B. ein Geruchsfilter oder dergleichen installiert werden, der eine mögliche Geruchsbelästigung aus allen Rohren wirksam auffangen kann. Außerdem hat eine derartige Sammelleitung den Vorteil, daß bei einer Verstopfung an irgendeiner Überlaufleitung die abzuscheidende Flüssigkeit nicht in den Auslauf gelangt sondern erneut in den Zulauf, so daß noch Maßnahmen getroffen werden können, ehe eine Verunreinigung des aus dem Ablauf entweichenden Mediums stattfindet.

Zur Vermeidung einer Überlastung der Vorrichtung kann gemäß der Erfindung in der einen oder anderen Gestalt der Zulauf mit einer Drossel versehen sein, die dafür sorgt, daß die Nennzulaufmenge im wesentlichen nicht überschritten wird. Eventuell überschüssige Gemischmengen können dann vorübergehend in Auffangtanks umgeleitet werden, deren Inhalt dann bei Unterbelastung durch die Vorrichtung geschickt werden kann. Eine derartige Drossel wird noch am leichtesten durch eine Querschnittsverengung gebildet, beispielsweise durch einen kastenartiges, quaderförmiges Reduzierstück.

Je nach zu erwartenden Flüssigkeitsbestandteilen muß die Höhe der Überlaufkante an den Oberlaufrohren in den oder in die Sammelbehälter gewählt werden. Bei bekannten Flüssigkeiten wird diese Wahl bereits bei der Herstellung getroffen bzw. nach Probeläufen endgültig festgelegt. Darüber hinaus können diese Oberlaufkanten einstellbar gewählt werden, beispielsweise mit Hilfe von Schlauchverbindungen zwischen dem jeweiligen Überlaufrohr und einer in der Höhe variablen Oberlaufkante.

Die Vorrichtung gemäß der Erfindung eignet sich selbstverständlich auch für eine parallele Chemikalienbehandlung, beispielsweise zur Unschädlichmachung von Tensiden. Dazu sind insbesondere in dem vertikalen Rohr des Zulaufs, in der Überströmleitung oder im Auslaufsteigrohr Düsen angeordnet, über die mit Hilfe einer Hochdruck- oder Niederdruckdosieranlage Chemikalien in vorwählbarer Menge in die entsprechende Flüssigkeit eingegeben werden können.

Nachfolgend wird ein Ausführungsbeispiel der Erfindung, das in der Zeichnungdargestellt ist, näher erläutert; die Zeichnung zeigt:

Fig. 1 eine schematische Querschnittsansicht einer Vorrichtung gemäß der Erfindung und
Fig. 2 eine Seitenansicht des Ausführungsbeispiels gemäß der Fig. 1.

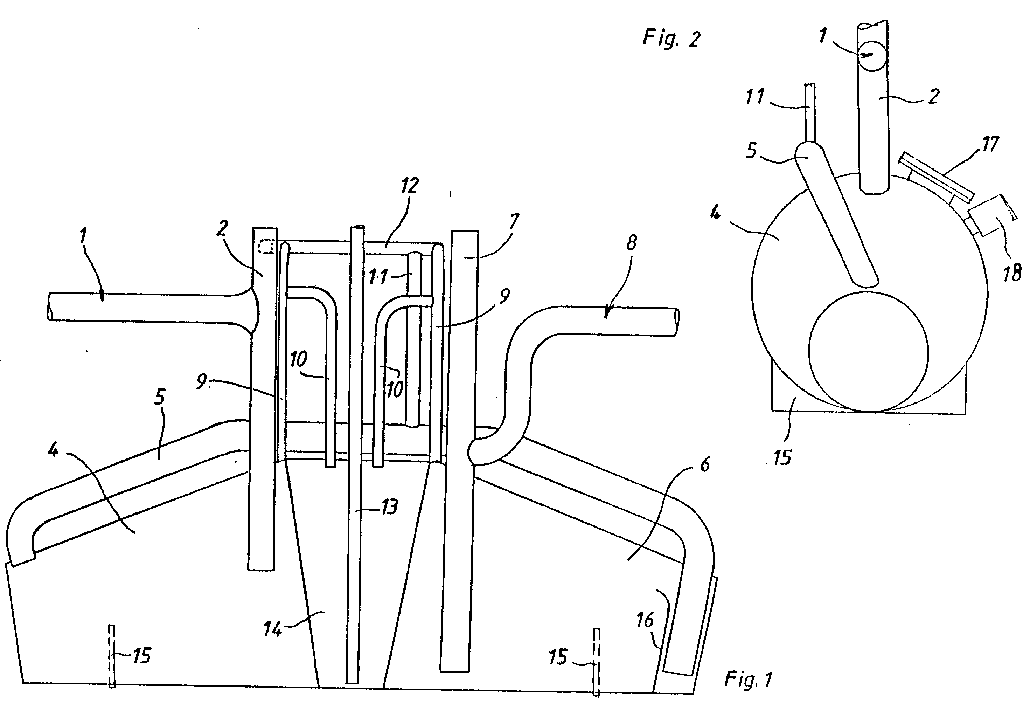

In den Figuren 1 und 2 ist ein Ausführungsbeispiel der Erfindung dargestellt. Ein Zulauf 1 ist beispielsweise an das Bodenablaufnetz eines Verbrauchers angeschlossen, über den ein kontaminiertes Medium, beispielsweise Regenwasser mit Öl- oder Fettanteilen über ein vertikales, oben offenes Rohr 2 in einen Vorabscheider 4 gelangt. Infolge der kegelstumpfartigen Ausbildung des Vorabscheiders 4 sammeln sich Flüssigkeitsbestandteile mit einem geringen spezifischen Gewicht an der höchsten Stelle, während das bereits gut gereinigte Hauptmedium durch eine Überströmleitung 5 in einen Nachabscheider 6 fließt, wobei ein Schwallblech 16 einen direkten Stromfaden von dem tief in dem Nachabscheider 6 hinabgezogenen Aus laß der Überströmleitung 5 zu einem Steigrohr 7 verhindert, an dem als Auslaß 8 der gesamten Vorrichtung ein Rohrkrümmer angebracht ist.

An der höchsten Stelle des Vorabscheiders 4 befindet sich ein Separationsrohr 9, von dem aus ein Überlaufrohr 10 in einen Sammelbehälter 14 führt. Eine gleiche Anordnung ist an dem Nachabscheider 6 vorhanden. Die beiden Separationsrohre 9 sind an ihrem oberen Ende in einer Sammelleitug 12 zusammengefaßt, die in dem vertikalen, oben offenen Rohr 2 mündet. Das dem Nachabscheider 6 zugeordnete Überlaufrohr 10 liegt bezüglich der Überlaufkante niedriger als die Überlaufkante des benachbarten Überlaufrohres 9. Diese Anordnung ist bewußt herbeigeführt, da der statische Druck auf Grund der Strömungsverhältnisse in der gesamten Vorrichtung in dem Nachabscheider 6 geringer ist und somit die Grenzschicht zwischen der abzuscheidenden leichten Flüssigkeit und dem Hauptmedium etwas tiefer in dem Separationsrohr 9 steht.

Auch die Überstromleitung 5 ist über ein Belüftungsrohr 11 mit der Sammelleitung 12 verbunden, also voll belüftet. Mit Hilfe dieses Belüftungsrohres 11 gelingt bei der ersten Inbetriebnahme - wenn die Abscheider 4 und 6 noch mit Luft gefüllt sind - die Entlüftung der Überströmleitung 5 und im übrigen eine Dämpfung von Druckschwankungen im Zulaufbereich der Vorrichtung, die sich möglicherweise auf den Nachabscheider 6 auswirken können.

Der Sammelbehälter 14 kann über eine Entsorgungsleitung 13 stetig, periodisch oder nach Bedarf entleert werden, wobei im letzteren Fall eine Füllstandsanzeige 18 (Fig. 2) eingesetzt wird, die gegebenenfalls mit einer Alarmeinrichtung zur Einleitung des Entleerungsvorganges verbunden ist. Im übrigen gestattet ein Mannloch 17 den Zugang zu dem Sammelbehälter 14, beispielsweise für Reinigungszwecke oder für Reparaturen.

Die Abscheider 4 und 6 können über die vertikalen, oben offenen Rohre 2 und 7 sehr leicht entleert und auch gegebenenfalls von Schlamm befreit werden, der sich in Grundnähe abgesetzt haben mag. Die kleineren Stirnseiten der kegelstumpfförmigen Abscheider 4 und 6 sind außerdem als abschraubbare Deckel ausgebildet (nicht dargestellt), so daß gegebenenfalls auch eine Begehung und damit eine Reparatur möglich ist. Es versteht sich von selbst, daß für derartige Arbeiten das Schwallblech 16 ebenfalls entfernbar ist.

Der Vorabscheider 4 und der Nachabscheider 6 sind jeweils als kegekstumpfartige Behälter ausgebildet, deren unterste Mantellinie auf ein und derselben horizontalen Ebene liegen. Die beiden Abscheider 4 und 6 bilden zusammen mit dem dazwischenliegenden Sammelbehälter 14 eine handhabbare Einheit, die auf Füßen 15 ruht. Statt dieser Ausführungsform für geschlossene Räume kann auch eine Schachtausführung gewählt werden, bei der die integrale Bauweise von untergeordneter Bedeutung ist; die generelle Aufteilung empfiehlt sich jedoch in gleicher Weise vorzunehmen.

Sowohl das vertikale Rohr 2 als das Steigrohr 7 sind jeweils oben offen, so daß ein Rohr oder ein Schlauch in die Abscheider abgesenkt werden kann, um angesammelte Schlämme oder Sinkstoffe abzusaugen. Im übrigen dienen diese Rohre der Sicherstellung des hydrostatischen Gleichgewichtes innerhalb der Vorrichtung. Insbesondere findet über diese Rohre ein Druckausgleich bei Druckschwankungen in dem Zulauf 1 und dem Ablauf 8 statt, die unbeabsichtigt sind, jedoch gelegentlich auftreten können. Der Auslauf 8 für das Hauptmedium ist so angeordnet, daß der Flüssigkeitsstand in dem Steigrohr 7 gerade unterhalb der tiefsten Stelle des Auslaufs 8 gehalten wird. Dadurch ist sichergestellt, daß der Auslauf 8 bei fehlendem Zulauf leerläuft und damit austrocknet. Damit wird der Fäulnis und der Zersetzung von Flüssigkeiten sowie dem Bakterienbefall vorgebeugt. Aus demselben Grunde ist auch jedes Separationsrohr 9 eng gehalten, damit bei ruhender Vorrichtung die bis in diesem Bereich angehobene Grenzschicht zwischen den beiden Medien eine möglichst kleine Fläche aufweist. Denn gerade diese Trennfläche ist bezüglich der Qualitätsverschlechterung besonders gefährdet.

Aus den vorangehenden Erläuterungen der Zeichnung ist ersichtlich, daß eine einwandfreie Funktion nur gesichert ist, wenn freie Fließverhältnisse vorhanden sind, sich also an keiner Stelle der Vorrichtung Drücke aufbauen können, die das hydrostatische Gleichgewicht zerstören. Um diese Verhältnisse sicherzustellen, kann es zweckmäßig sein, daß der Zulauf gegenüber den restlichen Leitungen dem Zustrom eines kontaminierten Mediums einen größeren Widerstand entgegensetzt, was durch die Wahl der Rohrquerschnittes oder durch Fließhindernisse erreicht werden kann.

Bei dem erläuterten Ausführungsbeispiel findet eine Feinseparierung in den jeweiligen Separationsrohren 9 statt, das den Stömungen des zugeordneten Abscheiders weitgehend entzogen ist, so daß eine bereits begonnene Separierung nicht mehr gestört wird, sondern eher gefördert wird. Diese Verhältnisse führen dazu, daß die Vorrichtung gemäß den Figuren 1 und 2 im Vorabscheider 4 Abscheidungsgüten erreicht, die einen Nachabscheider 6 entbehrlich erscheinen lassen. Letzterer liefert jedoch stets einen Beitrag zur Separierung und sollte deshalb bei besonderen Anforderungen an die Separierung beibehalten werden. Im übrigen bietet der Nachabscheider 6 eine ausgezeichnete Sicherheit gegen Verunreinigung des aus dem Ablauf 8 austretenden Hauptmediums bei einem sogenannten Überlastfall, bei dem nämlich pro Zeiteiheit eine höhere Flussigkeitsmenge zuläuft als die Nennmenge. Dieser Zustand führt zu starken Turbulenzen innerhalb der Vorrichtung, die dafür sorgen, daß es zu keiner sauberen Separierung kommt, vielmehr werden beide Flüssigkeitsbestandteile verwirbelt und beispielsweise in die Überströmleitung 5 mitgerissen.

Hier schafft die Erfindung ideale Voraussetzungen durch die oben offenen Rohre 2 und 7 sowie die Verbindung mit der Umgebung, über die Sammelleitung 12 aller übrigen Rohre. Darüber hinaus kann eine Drosselung des Zulaufs 1 vorgenommen werden. Für diesen Fall muß jedoch dann ein puffertank für die vorübergehend nicht verarbeitete Flüssigkeitsmenge bereitgestellt werden, der in Perioden der Unterbelastung aufgearbeitet werden kann. Abweichend davon kann auch die Zulaufhöhe abgesenkt werden, insbesondere durch eine Absenkung der Oberkante des Zulaufquerschnitts beim Eintritt in das vertikale Rohr 2. Auch durch diese Maßnahme wird die Durchströmgeschwindigkeit durch die Vorrichtung abgesenkt, da der statische Druck aus dem vertikalen Rohr des Zulaufs 1 abnimmt. Allerdings kann sich auch durch diese Maßnahme ein Rückstau im Zulauf 1 bilden, der in Kauf genommen werden muß oder vorübergehend von einem Puffertank aufgefangen werden muß.

**Patentansprüche**

1. Vorrichtung zum Separieren von Flüssigkeiten unterschiedlichen spezifischen Gewichtes, bestehend aus einem Abscheidebehälter (6) mit einem Zulauf (1) für das Flüssigkeitsgemisch und einem an seiner höchsten Stelle angebrachten Separationsrohr (9), bei der der Flüssigkeitsbestandteil mit dem geringeren spezifischen Gewicht aus dem Seperationsrohr seitlich über ein Überlaufrohr (10) und der Flüssigkeitsbestandteil mit dem nächsthöheren spezifischen Gewicht über eine als Ablauf (8) dienende Abzweigung abläuft, die von einem mit seinem unteren Ende in den Abscheidebehälter (6) tief hineinragenden, oben offenen Steigrohr (7) abgeht, und bei der bei gefüllter Vorrichtung im Ruhezustand die Grenzschicht zwischen diesen beiden Flüssigkeitsbestandteilen innerhalb des Seperationsrohrs (9) liegt, dadurch gekennzeichnet, daß voneinander getrennt ein Vorabscheider (4) und ein Nachabscheider (6) vorhanden sind, daß zur Verbindung beider Abscheider (4, 6) eine Überströmleitung (5) vorhanden ist, daß der Zulauf (1) und die Seperationsrohre (9) ebenfalls als vertikale, oben offene Rohre ausgebildet sind, daß die Überströmleitung (5) mit einem vorhandenen, vertikalen Rohr verbunden oder mit einem eigenen Belüftungsrohr (11) versehen ist, und daß alle vertikalen Rohre (2, 9), das Steigrohr (7) und das Belüftungsrohr (11) direkt oder über eine Sammelleitung (12) mit der Umgebung in Austausch stehen.

2. Vorrichtung nach Anspruch 1, dadurch gekennzeichnet, daß das Überlaufrohr (10) an jedem Seperationsrohr (9) höher liegt als die Höhe des Zulaufs und mit einem darunterliegenden Sammelbehälter (14) verbunden ist.

3. Vorrichtung nach Anspruch 2, dadurch gekennzeichnet, daß der Sammelbehälter (14) durch eine Zwischenwand insbesondere an der Oberseie des einen Abscheiders (4, 6) gebildet ist oder zwischen beiden Abscheidern (4, 6) liegt und insbesondere zum Teil durch die sich gegenüberliegenden Wände der Abscheider (4, 6) gebildet ist.

4. Vorrichtung nach einem der vorhergehenden Ansprüche, dadurch gekennzeichnet, daß an das vertikale Rohr (2) des Zulaufs (1) mit Hilfe einer Leitung der Ablauf eines Schlammfangs angeschlossen ist.

5. Vorrichtung nach einem der Ansprüche 1 bis 4, dadurch gekennzeichnet, daß die Überströmleitung (5) möglichst lang ist und gegebenenfalls künstliche Verlängerungen wie Windungen und dergleichen enthält, und daß die Zuström- und Abströmstellen des Hauptmediums in beiden Abscheidern (4, 6) einen möglichst großen Abstand zueinander haben.

6. Vorrichtung nach einem der Ansprüche 1 bis 5, dadurch gekennzeichnet, daß jeder Abscheider (4, 6) als liegender Kegelstumpf ausgebildet ist, dessen oberste Mantellinie zur Horizontalen geneigt ist.

7. Vorrichtung nach Anspruch 6, dadurch gekennzeichnet, daß die Abscheider (4, 6) gleich ausgebildet sind und mit ihren größten Stirnflächen einander zugewandt sind, und daß zwischen diesen Stirnflächen der Sammelbehälter (14) angeordnet ist, insbesondere ein zylindrischer Sammelbehälter, der beide Kegelstümpfe verbindet.

8. Vorrichtung nach Anspruch 6 oder 7, dadurch gekennzeichnet, daß die jeweils unterste Mantellinie der Kegelstümpfe in einer horizontalen Ebene liegt oder jeweils zu dem vertikalen Zulaufrohr (2) bzw. zu dem Steigrohr (7) des Auslaufs (8) ein Gefälle aufweist.

9. Vorrichtung nach einem der Ansprüche 2 bis 8, dadurch gekennzeichnet, daß jeder Abscheider (4, 6) mit einer bis zum Grund reichenden, gesonderten Entsorgungsleitung versehen ist.

10. Vorrichtung nach Anspruch 1, dadurch gekennzeichnet, daß die Sammelleitung (12) in das vertikale Rohr (2) oberhalb des Zulaufes (1) mündet.

11. Vorrichtung nach einem der vorhergehenden Ansprüche, dadurch gekennzeichnet, daß im Zulauf (1) zu dem vertikalen Rohr (2) oder innerhalb des vertikalen Rohres (2) eine Querschnittsverengung als Drossel für die Zulaufmenge und/oder die Zulaufhöhe angeordnet ist.

12. Vorrichtung nach Anspruch 2, dadurch gekennzeichnet, daß die Höhenlage der Abzweigung bzw. eines dort angebrachten Rohrkrümmers und damit die Lage der Oberlaufkante im Vergleich zu der Zulaufkante einstellbar und/oder die Zulaufhöhe absenkbar ist, insbesondere durch eine Absenkung der Oberkante des Zulaufquerschnittes bei Eintritt in das dem Zulauf (1) zugeordnete vertikale Rohr (2).

13. Vorrichtung nach einem der vorhergehenden Ansprüche, dadurch gekennzeichnet, daß das dem Zulauf (1) zugeordnete vertikale Rohr (2)) die Oberströmleitung (5) oder das dem Auslauf (8) zugeordnete Steigrohr (7) mit Düsen, die gegebenenfalls mit einer Hochdruck- oder Niederduckeinspritzung verbunden sind, zum Eindosieren von Chemikalien versehen ist.

**Claims**

1. Device for separating liquids of different densities, consisting of a separator vessel (6) with a feed line (1) for the liquid mixture and a separator pipe (9) fitted to the highest point of the vessel, wherein the liquid constituent of the lower density runs off out of the separator pipe to the side via an overflow pipe (10) and the liquid constituent of the next higher density runs off via a branch serving as a discharge line (8) which starts from a riser (7), the lower end of which projects deeply into the separator vessel (6) and which is open at the top, and wherein, when the device is filled, the interface between these two liquid constituents in the quiescent condition is within the separator pipe (9), characterized in that a mutually separate preseparator (4) and postseparator (6) are provided, that an overflow line (5) for connecting the two separators (4, 6) is provided, that the feed line (1) and the separator pipes (9) are likewise formed as vertical pipes open at the top, that the overflow line (5) is connected to an existing vertical pipe or is provided with its own vent pipe (11), and that all the vertical pipes (2, 9), the riser (7) and the vent pipe (11) are in exchange with the surroundings directly or via a collecting line (12).

2. Device according to Claim 1, characterized in that the overflow pipe (10) on each separator pipe (9) is located at a level higher than that of the feed line and is connected to a collecting vessel (14) located underneath.

3. Device according to Claim 2, characterized in that the collecting vessel (14) is formed by a partition especially on the upper side of one separator (4, 6) or between the two separators (4, 6) and, in particular, is partially formed by the mutually opposite walls of the separators (4, 6).

4. Device according to one of the preceding claims, characterized in that the discharge line of a silt trap is connected via a line to the vertical pipe (2) of the feed line (1).

5. Device according to one of Claims 1 to 4, characterized in that the overflow line (5) is as long as possible and, if necessary, contains artificial prolongations such as coils and the like, and that the inflow and outflow points of the main medium in the two separators (4, 6) are as far apart as possible.

6. Device accordng to one of Claims 1 to 5, characterized in that each separator (4, 6) has the shape of a horizontal truncated cone, the top generating line of which is inclined to the horizontal.

7. Device according to Claim 6, characterized in that the separators (4, 6) are of the same shape and face each other with their largest end faces, and that the collecting vessel (14), in particular a cyclindrical collecting vessel which connects the two truncated cones, is located between these end faces.

8. Device according to Claim 6 or 7, characterized in that the lowest generating line of each of the truncated cones is located in a horizontal plane or has in each case a gradient towards the vertical feed pipe (2) or towards the riser (7) of the discharge line (8).

9. Device according to one of Claims 2 to 8, characterized in that each separator (4, 6) is provided with a separate disposal line extending down to the ground.

10. Device according to Claim 1, characterized in hat the collecting line (12) leads into the vertical pipe (2) above the feed line (1).

11. Device according to one of the preceding claims, characterized in that a reduction in cross-section as a restrictor for the feed rate and/or the feed level is provided in the feed line (1) to the vertical pipe (2) or within the vertical pipe (2).

12. Device according to Claim 2, characterized in that the level of the branch, or of a pipe elbow fitted there, and hence the position of the overflow edge is adjustable relative to the inflow edge and/or the inflow level can be lowered, in particular by lowering the upper edge of the feed cross-section at the entry to the vertical pipe (2) associated with the feed line (1).

13. Device according to one of the preceding claims, characterized in that the vertical pipe (2) associated with the feed line (1), the overflow line (5) or the riser (7) associated with the discharge line (8) is provided with nozzles, which may be connected, if appropriate, to a highpressure or low-pressure injection unit, for the controlled addition of chemicals.

**Revendications**

1. Dispositif pour séparer des liquides de poids spécifiques différents, constitué d'un récipient de séparation (6) pourvu d'une alimentation (1) pour le mélange de liquides et d'un tube de séparation (9) disposé à son point le plus haut, dans lequel la partie liquide de poids spécifique le plus faible quitte latéralement le tube de séparation par un tube de trop-plein (10) et dans lequel la partie liquide de poids spécifique immédiatement inférieur, sort par une dérivation servant d'exutoire (8) qui part d'un tube de montée (7) ouvert à son extrémité supérieure et plongeant à son extrémité inférieure profondément dans le récipient de séparation, et dans lequel, le dispositif étant plein et au repos, la surface de séparation entre deux parties liquides se situe dans le tube de séparation (9), caractérisé par le fait qu'il comporte un pré-séparateur (4) et un post-séparateur (6), séparés l'un de l'autre, une conduite de décharge (5) reliant les deux séparateurs (4, 6), que l'alimentation (1) et les tubes de séparation (9) sont également constitués par des tubes verticaux ouverts vers le haut, que la conduite de décharge (5) est reliée à un tube vertical d'aération, ou est elle-même munie d'un tube d'aération propre (11), et que tous les tubes verticaux (2, 9) le tube de montée (7) et le tube d'aération (11) sont en communication avec l'ambiance directement ou par un tube collecteur (12).

2. Dispositif selon la revendication 1, caractérisé par le fait que le tube de trop-plein (10) de chaque tube de séparation (9) est disposé plus haut que la hauteur de l'exutoire et est relié à un récipient collecteur (14) situé en dessous.

3. Dispositif selon la revendication 2, caractérisé par le fait que le récipient collecteur (14) est constitué par une paroi intermédiaire, notamment sur le côté supérieur d'un des séparateurs (4, 6), ou est disposé entre les deux séparateurs (4, 6), et est formé notamment en partie par les parois des séparateurs (4, 6) se faisant face.

4. Dispositif selon l'une des revendications précédentes, caractérisé par le fait que le tube vertical (2) de l'alimentation (1) est relié par une conduite de sortie à un dispositif récupérateur de vase.

5. Dispositif selon une revendications 1 à 4, caractérisé par le fait que la conduite de décharge (5) est aussi longue que possible et présente le cas échéant des prolongations artificielles telles que des méandres ou autres, et que les points d'arrivée et de sortie du milieu principal dans les deux séparateurs sont aussi éloignés l'un de l'autre que possible.

6. Dispositif selon l'une des revendications 1 à 5, caractérisé par le fait que chaque séparateur (4, 6) à une forme en coin dont la paroi supérieure est inclinée par rapport à l'horizontale.

7. Dispositif selon la revendication 6, caractérisé par le fait que les séparateurs sont de même constitution, que leurs grandes faces frontales se font face, et qu'entre ces faces frontales, est disposé le réservoir collecteur (14), notamment sous forme de cylindre reliant les deux formes en coins.

8. Dispositif selon la revendication 6 ou la revendication 7, caractérisé par le fait que la face inférieure des formes en coins est dans un plan horizontal ou présente une pente descendant en direction du tube vertical d'alimentation (2) ou du tube de montée (7) de l'exutoire (8).

9. Dispositif selon l'une des revendications 2 à 8, caractérisé par le fait que chaque séparateur (4, 6) est pourvu d'une conduite particulière de vidange en atteignant le fond.

10. Dispositif selon la revendication 1, caractérisé par le fait que la conduite collectrice (12) se jette dans le tube vertical (2) au-dessus de l'alimentation (1).

11. Dispositif selon l'une des revendications précédentes; caractérisé par le fait que dans l'alimentation (1) du tube vertical (2), ou que dans le tube vertical (2), est aménagé un rétrécissement de section pour former un étranglement au débit d'alimentation à la hauteur de cette alimentation.

12. Dispositif selon la revendication 2, caractérisé par le fait que la hauteur de la dérivation ou d'un coude qui y est disposé, donc la position du bord de déversement par rapport au bord de l'alimentation, est réglable et/ou que la hauteur d'alimentation peut être abaissée, notamment par un abaissement du bord supérieur de la section d'alimentation à l'entrée de cette alimentation (1) dans le tube vertical (2) associé à celle-ci.

13. Dispositif selon l'une des revendications précédentes, caractérisé par le fait que le tube vertical (2) associé à l'alimentation (1), la conduite de décharge (5), ou le tube de montée (7) associé à l'exutoir (8) sont pourvus d'injecteurs reliés le cas échéant à un dispositif d'injection à haute ou basse pression pour doser l'introduction de produits chimiques.

Fig. 2

Fig. 1